# EUROPÄISCHE PATENTSCHRIFT

(11) **EP 1 958 008 B1**
(45) Veröffentlichungstag und Bekanntmachung des Hinweises auf die Patenterteilung: **15.08.2012**
(21) Anmeldenummer: 06818541.2
(22) Anmeldetag: 15.11.2006
(51) Int. Cl.: G02B 1/10, G02B 5/08

(54) **REFLEKTOR MIT EINER SCHUTZSCHICHT AUS SOL-GEL-LACK**
REFLECTOR WITH A PROTECTIVE LAYER MADE OF SOL-GEL LACQUER
REFLECTEUR MUNIE D'UNE COUCHE PROTECTRICE EN VERNIS SOL-GEL

(30) Priorität: 25.11.2005 EP 05405668
(43) Veröffentlichungstag der Anmeldung: 20.08.2008
(73) Patentinhaber: Constellium Switzerland AG, 8048 Zürich (CH)
(72) Erfinder: GILLICH, Volkmar, CH-8212 Neuhausen am Rheinfall (CH); FUCHS, Roman, CH-8212 Neuhausen am Rheinfall (CH)
(74) Vertreter: Fénot, Dominique
(86) Internationale Anmeldenummer: PCT/EP2006/010935
(87) Internationale Veröffentlichungsnummer: WO 2007/059883

(56) Entgegenhaltungen:
- EP-A2- 1 288 245
- WO-A-01/86327
- US-A1- 2003 124 467
- US-A1- 2005 158 591
- US-B1- 6 463 760
- US-B1- 6 855 396

## Beschreibung

Vorliegende Erfindung betrifft ein Verfahren zur Herstellung eines witterungs- und korrosionsbeständigen Reflektor nach dem Oberbegriff des Anspruchs 1.

Es ist allgemein bekannt, Bänder in Glänzwerkstoffen, z.B. Relnaluminium, Reinstaiuminium oder AIMg-Legierungen auf Basis von Aluminium mit einem Reinheitsgrad von 99,5% und grösser, wie z.B. 99,8%, die Je nach Anwendung diffuse oder gerichtete Lichtreflexion erzeugen, herzustellen und diese mit einem sogenannten Sol-Gel-Lack zu beschichten. Geeignete Sol-Gel-Lacke bilden eine transparente Schutzschicht, welche die darunter liegende reflektierende Oberfläche vor mechanischen oder chemischen Einflüssen schützt und dadurch eine lange Lebensdauer des Reflektors bei hoch bleibenden Reflexionswerten gewährleistet. Besonders geeignete Sol-Gel-Lacke sind überdies witterungsbeständig und eignen sich daher gut für Aussenwendungen. Die transparente Schutzschicht ist Insbesondere eine klare, farblose, durchsichtige Schutzschicht.

Die WO 2001/86327 beschreibt einen solchen witterungs- und korrosionsbeständigen Reflektor aus einem Reflektorkörper aus Aluminium oder einer Aluminiumlegierung mit einer reflektierenden Oberfläche, wobei der Reflektor eine aussen liegende, abschilessende transparente Schutzschicht aus einem Sol-Gel-Lack mit einer Dicke von mehr als 1 µm aufweist. Der Sol-Gel-Lack besteht aus einem Polysiloxan, welches aus einer alkoholischen Silan-Lösung und einer wässrigen kolloidalen Keselsäure-Lösung hergestellt wird.

Sol-Gel-Lacke sind bekanntlich lösungsmittelhaltig und setzen bei ihrer Verarbeitung Dämpfe frei, welche in der Regel gesundheitsschädlich und leicht entzündbar sind. In der Lack verarbeitenden Industrie werden jedoch zunehmend Lacksysteme verlangt, welche ein geringes Gesundheitsrisiko aufweisen und aus Sicherheitsgründen einen erhöhten Flammpunkt aufweisen. Der Einsatz solcher Lacksysteme wird sogar in zunehmendem Masse durch Vorschriften vorgeschrieben.

Ein Verfahren der eingangs genannten Art ist in WO 01/86327 A offenbart.

Aus EP-A-1 288 245 ist es zur Herstellung eines Sol-Gel-Lackes mit einem Flammpunkt von >21°C bekannt, den Sol-Gel-Lack durch eine gezielte, partielle Hydrolyse und Kondensation von Alkylalkoxysilanen und Alkoxysilanen in Anwesenheit von wässrigem Kieselsol herzustellen und den Hydrolysealkohol zur Erhöhung des Flammpunktes durch einen Alkohol oder ein Glykol oder ein entsprechendes Gemisch Alkoholen und/oder Glykol mit höherem Flammpunkt zu ersetzen. Mit dem wässrigen Kieselsol wird hier nicht der Flammpunkt, sondern lediglich der Feststoffgehalt zur Erzielung einer ausreichenden Lagerstabilität erhöht.

Aufgabe vorliegende Erfindung ist es, ein Verfahren zur Herstellung eines Reflektors vorzuschlagen, dessen Lacksystem sich dadurch auszeichnen soll, dass es einerseits möglichst keine gesundheitsschädlichen Komponenten enthält bzw. bei seiner Verarbeitung freisetzt und andererseits bei jedem Verabeitungsschritt einen Flammpunkt von >21° C aufweist. Der Flammpunkt wird nach ISO 13736 bzw. ASTM D6450 gemessen. Der Flammpunkt kann auch nach DIN 53213 gemessen werden, wobei auch hier der Zielwert bei >21° C liegt.

Die Aufgabe wird gelöst mit einem Verfahren mit den Merkmalen des Anspruchs 1.

Die Lösung A enthält zweckmässig ein mit dieser mischbares Lösungsmittel, insbesondere ein polares Lösungsmittel, wie Alkohol oder Ethylacetat. Zur Erhöhung des Flammpunktes des herzustellenden Lacksystems kann ein alkoholisches Lösungsmittel mit einem vergleichsweise hohen Siedepunkt, wie z.B. ein Glykol oder eine Glykolverbindung, wie Ethylenglykol oder Buthoxyethanol, verwendet werden.

Die Lösung B kann eine wässrige kolloidale Kieselsäure-Lösung oder angesäuertes Wasser bzw. eine saure, wässrige Lösung sein. Der pH-Wert der Lösung B liegt zweckmässig tiefer 7.

Die Schutzschicht weist im gehärteten Zustand eine Dicke von wenigstens 1 µm, vorzugsweise wenigstens 2 µm, und von höchstens 20 µm, vorzugsweise höchstens 10 µm, insbesondere höchstens 5 µm, auf.

Die reflektierende Oberfläche aus Aluminium oder einer Aluminiumlegierung weist bevorzugt eine Rauhigkeit Ra von kleiner als 0,1 µm nach DIN 4761 bis 4768 auf. Der Reflektor weist ferner gemäss 2000h QUV-Test nach ASTM G 53-96 Einbussen in der Gesamtreflexion und im Glanz von weniger als 5 % auf.

Die reflektierende Oberfläche kann durch eine auf den Raflektorkörper aufgetragene metallische Reflexionsschicht oder bevorzugt durch die Reflektorkörperoberfläche selbst ausgebildet sein.

Der Reflektorkörper besteht aus oder weist wenigstens eine freie Oberfläche, insbesondere eine Beschichtung, aus einem Metall, insbesondere aus Aluminium oder einer Aluminiumlegierung, wie z.B. Aluminium mit einer Reinheit von 98,3% und höher, auf. Der Reflektorkörper besteht aus oder weist wenigstens eine freie Oberfläche, insbesondere eine Beschichtung, vorteilhaft aus Aluminium mit einer Reinheit von 99,0% und höher, fallweise auch mit einer Reinheit von 99,5% und höher, vorzugsweise jedoch mit einer Reinheit von 99,7% und höher, und insbesondere von 99,8% und höher, auf. Neben Aluminium genannter Reinheiten können bevorzugt auch Aluminiumlegierungen eingesetzt werden. Bevorzugte Legierungen sind diejenigen der Klassen AA 1000, AA 3000 und AA 5000. Weitere anwendbare Legierungen enthalten beispielsweise 0,25 bis 5 Gew.%, insbesondere 0,5 bis 4 Gew.-%, Magnesium oder enthalten 0,2 bis 2 Gew.-% Mangan oder enthalten 0,5 bis 5 Gew.% Magnesium und 0,2 bis 2 Gew.-% Mangan, insbesondere 1 Gew.-% Magnesium und 0,5 Gew.-% Mangan oder enthalten 0,1 bis 12 Gew.-%, vorzugsweise 0,1 bis 5 Gew.%, Kupfer oder enthalten 0,5 bis 6 Gew.-% Zink und 0,5 bis 5 Gew.% Magnesium oder enthalten 0,5 bis 6 Gew.-% Zink, 0,5 bis 5 Gew.-% Magnesium und 0,5 bis 5 Gew.% Kupfer oder enthalten 0,5 bis 2 Gew.% Eisen und 0,2 bis 2 Gew.-% Mangan, insbesondere 1,51 Gew.-% Eisen und 0,4 Gew.-% Mangan oder AlMgSi-Legierungen oder AlFeSi-Legierungen. Weitere Beispiele sind AlMgCu-Legierungen, wie A199,85Mg0,8Cu oder AlMg-Legierungen, wie AlMg1, oder AlFeMn-Legierungen wie AlFeMn1,5.

Der Reflektorkörper ist bevorzugt ein Walzprodukt und insbesondere ein gewalztes Blech, oder Band, eine gewalzte Folie oder Platte aus walzbarem Aluminium oder einer walzbaren Aluminiumlegierung. Der Reflektorkörper als Walzprodukt kann gegebenenfalls z.B. durch Biegen, Tiefziehen, Kaltfliesspressen und dgl. umgeformt sein.

Ferner können als Reflektorkörper alle räumlichen Gebilde, die wenigstens eine freie Oberfläche aus einem vorgenannten Aluminium oder einer der vorgenannten Aluminiumlegierungen enthalten oder die vollständig daraus bestehen, zur Anwendung gelangen. Es können auch nur Teilbereiche oder begrenzte Oberflächenbereiche des Reflektorkörpers aus den vorgenannten Aluminiumwerkstoffen oder Aluminiumlegierungen bestehen. Weiters können die genannten räumlichen Gebilde Profile oder Balken sein.

Ferner können die Reflektorkörper auch Guss- oder Schmiedeteile aus Aluminium oder einer Aluminiumlegierung sein.

Je nach Einsatzzweck kann der ganze Reflektorkörper aus Aluminium oder einer Aluminiumlegierung sein, es können aber auch nur Teilbereiche oder Oberflächenbereiche daraus bestehen. Das Material aus Aluminium oder der Aluminiumlegierung, z.B. in der Ausführung eines Bleches, einer Folie oder Platte oder einer Beschichtung, kann auch Teil oder Teiloberfläche eines Verbundes darstellen, z.B. eines Folienverbundes oder Laminates beliebiger Werkstoffe, wie z.B. aus Kunststoffen und Aluminium, wie Al-beschichteter Kunststoff, oder Al-beschichtetes Eisen- oder Stahlblech.

Die Reflektorkörperoberfläche, d.h. die Aluminiumoberfläche des Reflektorkörpers, kann beispielsweise durch chemische und/oder mechanische Veränderung, wie z.B. Walzen, Schmieden, Kaltfliesspressen, Pressen oder Giessen erzeugt werden. Die reflexionswirksame Oberfläche des Reflektorkörpers kann zusätzlich einer Nachbehandlung durch Schleifen, Polieren, Strahlen mit Hartstoffen usw. unterzogen werden. Bevorzugt sind Reflektorkörper mit Walzoberflächen, die mit glatten oder strukturierten Walzen erzeugt werden.

Bevorzugt als Reflektorkörper sind Bleche und Bänder, insbesondere gewalzte Bleche und Bänder aus Aluminium oder einer Aluminiumlegierung der vorgenannten Beschaffenheit sowie Aluminium-beschichtetes Eisen- oder Stahlblech mit einer Dicke von beispielsweise 0,1 bis 10 mm, vorzugsweise 1 bis 4 mm, insbesondere 0,2 bis 1,5 mm und besonders bevorzugt 0,3 - 1 mm, wobei die Aluminium-Beschichtung ebenfalls ein Aluminium oder eine Aluminiumlegierung der vorgenannten Beschaffenheit ist. Ein Beispiel ist ein Aluminiumblech Al 99,5 (Reinheit 99,5%) der Dicke von 0,5 mm.

Die Oberfläche des Reflektorkörpers, bzw. die reflektierende Oberfläche, kann vorbehandelt sein und beispielsweise eine Vorbehandlungsschicht aufweisen. Die Vorbehandlungsschicht kann beispielsweise eine durch Chromatierung, Phosphatierung oder durch anodische Oxidation erzeugte Schicht sein. Vorzugsweise ist die Vorbehandlungsschicht aus anodisch oxidiertem Aluminium und wird insbesondere direkt aus dem an der Oberfläche des Reflektorkörpers liegenden Aluminium erzeugt.

Die Vorbehandlungsschicht kann eine Dicke von beispielsweise wenigstens 10 nm, vorzugsweise von wenigstens 20 nm, insbesondere von wenigstens 50 nm und vorteilhaft von wenigstens 100 nm aufweisen. Die maximale Dicke der Vorbehandlungsschicht beträgt beispielsweise 5000 nm, vorzugsweise 1500 nm und insbesondere 300 nm.

Die Vorbehandlungsschicht ist bevorzugt eine anodisch erzeugte Oxidschicht, die in einem nicht rücklösenden und vorzugsweise in einem rücklösenden Elektrolyten aufgebaut wurde. Die Vorbehandlungsschicht ist vorzugsweise eine poröse, anodisch erzeugte Oxidschicht.

Die Anodisation findet vorzugsweise in einem sauren Elektrolyten aus der Reihe der Phosphorsäure-, Zitronensäure-, Weinsäure-, Chromsäureelektrolyte und insbesondere aus der Reihe der Schwefelsäureelektrolyte statt. Die Anodisation erfolgt im Wechsel- und vorzugsweise im Gleichstromverfahren. Es ist Stückanodisieren, wie auch Bandanodisieren möglich.

Die anodische erzeugte Oxidschicht kann ferner einer Sealing- resp. Verdichtungsbehandlung unterzogen werden. Die genannte Oxidschicht ist vorzugsweise nicht verdichtet.

Die Vorbehandlungschicht kann auch eine Gelbchromatierschicht, eine Grünchromatierschicht, eine Phosphatschicht oder eine chromfreie Vorbehandlungsschicht, die in einem Elektrolyten, enthaltend wenigstens eines der Elemente Ti, Zr, F, Mo oder Mn, aufgewachsen ist, enthalten.

Ferner kann die Aluminiumoberfläche zur Vorbehandlung in einem chemischen oder elektrochemischen Verfahren geglänzt sein oder einem alkalischen Beizprozess unterzogen sein. Solche Glänz- oder Beizverfahren werden vor dem Anodisieren durchgeführt.

Vor dem Auftrag einer Vorbehandlungsschicht oder Durchführung erster Vorbehandlungsschritte wird die Reflektoroberfläche zweckmässig entfettet und gereinigt. Die Vorbehandlung kann auch lediglich ein Entfetten und Reinigen der Reflektoroberfläche beinhalten. Die Reinigung der Oberfläche kann auf an sich bekannte Weise, z.B. chemisch und/oder elektrochemisch und sauer oder alkalisch, erfolgen. Sie bezweckt die Entfernung von Fremdsubstanzen und gegebenenfalls der natürlich entstanden Oxidschicht auf der Aluminiumoberfläche. Als Reinigungsmittel eignen sich z.B. saure, wässrige Entfettungsmittel, alkalische Entfettungsmittel auf der Basis von Polyphosphat und Borat. Eine Reinigung mit mässigem bis starkem Materialabtrag bildet das Beizen oder Ätzen mittels stark alkalischen oder sauren Beizlösungen, wie z.B. Natronlauge oder ein Gemisch aus Salpetersäure und Flusssäure. Dabei wird die vorhandene Oxidschicht mitsamt seinen Verunreinigungen entfernt. Bei stark angreifenden alkalischen Beizen ist gegebenenfalls eine saure Nachbehandlung notwendig.

Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.

In einer bevorzugten Ausführung wird in einem Bandverfahren eine Vorbehandlungsschicht auf ein Aluminiumband aufgebracht. Dazu wird ein Aluminiumband (Al 99,85, Ra 0,04 µm) mit 500 mm Breite und 0,3 mm Dicke kontinuierlich bei rund 40 m/min anodisiert. Dabei wurden folgende Stufen durchlaufen (durchlaufene Bäder):
a) Entfettung bei einem pH-Wert von 9 - 9,5, bei ca. 50° C und Bonder V6150/01,
b) Spülen mit Leitungswasser (Raumtemperatur),
c) Anodisieren in 20% H₂SO₄ bei ca. 25°C und 20V Spannung,
d) Spülen in Leitungswasser bei ca. 50°C und
e) Spülen in entionisiertem Wasser bei ca. 85°C.

Auf die Vorbehandlungsschicht können anschliessend die Schutzschicht oder weitere Schichten aufgebracht werden. Das Band wird vorteilhaft erst nach Abschluss der Beschichtung, d.h. nach Beschichtung mit der Schutzschicht, in Bänder von gewünschter Grösse und Form aufgeteilt.

Die reflektierende Oberfläche weist eine Rauhigkeit Ra von zweckmässig weniger als 0,1 µ m, vorzugsweise von weniger als 0,05 µm und insbesondere von weniger als 0,02 µm auf. Die Oberflächenrauhigkeit Ra ist definiert in wenigstens einer der DIN-Vorschriften 4761 bis 4768.

Die Oberfläche des Reflektorkörpers kann glatt oder strukturiert sein und beispielsweise eine lichtleitende Struktur in der Ausprägung von z.B. eines Rippenmusters mit zahnförmigem Querschnitt aufweisen. Die Strukturierung kann z.B. über eine Walze mit entsprechendem Prägemuster erzeugt sein. Die Oberfläche des Reflektorkörpers kann bezüglich Strukturierung oder Rauhigkeit derart beschaffen sein, das die Reflexion der Strahlung gerichtet, gestreut oder eine Kombination davon ist.

Die vorgenannte Rauhigkeit Ra von strukturierten Oberflächen soll sich auf die einzelnen Teilflächen der Oberflächenstruktur beziehen, d.h. die Strukturierung selbst soll sinngemäss nicht in die Bestimmung der Rauhigkeit miteinbezogen sein.

In einer weiteren Ausführung kann auf den Reflektorkörper bzw. auf dessen Vorbehandlungsschicht eine die reflektierende Oberfläche ausbildende Reflexionsschicht aus einem Metall, wie z.B. eine Schicht aus Aluminium, Silber, Kupfer, Gold, Chrom, Nickel oder aus einer Legierungen, beispielsweise enthaltend überwiegend wenigstens eines der genannten Metalle, aufgetragen sein. Die Dicke der Reflexionsschicht kann beispielsweise 10 bis 200 nm (Nanometer) betragen. Ferner kann auf den Reflektorkörper bzw. auf dessen Vorbehandlungsschicht zur Einebnung der Oberflächenrauhigkeit eine funktionelle Schicht in der Ausführung einer organischen oder anorganischen Sol-Gel-Schicht aufgebracht sein. Die Reflexionsschicht kommt hier in der Regel direkt, oder über eine Haftschicht, auf die funktionelle Schicht zu liegen. Die Beschaffenheit der funktionellen Schicht ist in EP 918 236 A1 ausführlich beschrieben.

Die Reflexionsschicht kann ferner ein Teil eines Reflexionsschichtsystems sein, wobei das Reflexionsschichtsystem eine oder mehrere, auf der Reflexionsschicht aufgebrachten, transparente Schichten enthält. Beispielsweise 1, 2, 3, 4; 5, 6, 7, 8, 9 oder 10 transparente Schichten - gezählt ohne die Schutzschicht - erfüllen vorteilhaft bezüglich der optischen Dicke für jede Schicht die Formel λ/2, wobei insbesondere jede dieser transparenten Schichten eine Doppelschicht aus jeweils 2 Schichten der Dicke λ/4 ist. Die optische Dicke jeder transparenten Schicht mit der Formel λ/2 kann um ± 40 nm variieren. Bevorzugt ist eine transparente Schicht oder weiter bevorzugt sind zwei, drei oder mehrere transparente Schichten, die aus gleichen oder unterschiedlichen Materialien sein können, wobei jede der transparenten Schichten eine optische Dicke von λ/2 ± 40 nm aufweist und insbesondere eine Doppelschicht der Dicke 2 • λ/4 ist. Auf die genannte transparente Schicht oder Schichten, als oberste Schicht, resp. als die an der Oberfläche liegende Schicht, wird die Schutzschicht, die ihrerseits auch transparent ist, angeordnet. λ entspricht dem Intensitätsmaximum der Wellenlänge der reflektierten elektromagnetischen Strahlung.

Die Materialien der transparenten Schichten des Reflexionsschichtsystems bestehen aus oder enthalten z.B. Oxide, Nitride, Fluoride, Sulfide usw. von Alkalimetallen, z.B. Li, Na, K, Erdalkalimetallen, z.B. Mg, Ca, Sr, Ba, Halbmetallen, wie z.B. Si, Übergangsmetallen, z.B. Sc, Ti, V, Cr,Mn, Fe, Co, Ni, Y, Zr, Nb, Mo, Te, Ru,Rh, Pd, Hf, Ta, W, Re, Os, Ir ,Pt, Lanthanoiden, z.B. La, Ce, Pr, Nd, Pm, Dy, Yb, Lu usw. Es können namentlich genannt werden SiOₓ, wobei x die Bedeutung von 1,1 bis 2,0 und vorzugsweise 1,8 hat, Al₂O₃, MgF₂, TiO₂, B₂O₃, Be-Oxid, ZnO, SnO₂, Indium-Zinn-Oxid (ITO), CdS, CdTe und Hafnium- und Zirkon-Oxide. Vorteilhaft weisen wenigstens eine der transparenten Schichten, mit Ausnahme der Schutzschicht, andere Materialien auf, als die Schutzschicht selbst.

Alle oder einzelne Schichten des Reflexionsschichtsystems sowie die Reflexionsschicht können beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering, durch Plasmapolymerisation oder durch chemische Gasphasenabscheidung (chemical vapor deposition, CVD) mit und ohne Plasmaunterstützung, auf den Reflektorkörper, resp. auf eine darauf befindliche Vorbehandlungsschicht, aufgebracht werden. Andere Auftragungsverfahren sind Lackier- oder Tauchziehverfahren von im Sol-Gel-Prozess hergestellten Lösungen mit anschliessender Trocknung, flammpyrolytische Verfahren oder Flammbeschichtung mittels SiO₂. Es können auch zwei oder mehrere Verfahren kombiniert werden. Es können z.B. PVD-Schichten durch eine Flammbeschichtung mit SiO₂ ergänzt werden. Die genannten Reflexionsschichtsysteme sind beispielsweise in EP 918 236 A1 ausführlich beschrieben.

Die Schutzschicht aus Polysiloxan ist zweckmässig ein auf die Reflektorkörperoberfläche, die Vorbehandlungsschicht oder gegebenenfalls auf die Reflexionsschicht bzw. auf ein Reflexionsschichtsystem aufgetragener Sol-Gel-Lack, welcher nach einem Sol-Gel-Verfahren hergestellt wird.

Das Polysiloxan wird durch eine Kondensationsreaktion zwischen hydrolisierten und vernetzbaren Silanen, insbesondere Alkoxysilanen, und, falls vorhanden, kolloidaler Kieselsäure erzeugt. Die Kondensationsreaktion zwischen hydrolisierten Alkoxysilanen untereinander sowie hydrolisierten Alkoxysilanen und, falls vorhanden, kolloidaler Kieselsäure führt zur Ausbildung eines anorganischen Netzwerkes von Polysiloxanen. Gleichzeitig werden organische Gruppen, insbesondere Alkyl-Gruppen bzw. einfache Alkyl-Gruppen oder Methyl-Gruppen über Kohlenstoffbindungen in das anorganische Netzwerk eingebaut. Die organischen Gruppen, bzw. die Alkyl-Gruppen, nehmen jedoch nicht direkt an der Polymerisation bzw. der Vernetzung der Siloxane teil, d.h. sie dienen nicht zur Ausbildung eines organischen Polymersystems sondern lediglich zur Funktionalisierung. Die erhaltenen Polysiloxane sind deshalb eher den anorganischen Polymeren zuzuordnen.

Bei der Herstellung des erfindungsgemässen Sol-Gel-Lackes wird von den zwei Basislösungen A und B ausgegangen.

Die **Lösung A** ist bevorzugt eine alkoholische Lösung aus Tetraethoxysilan (TEOS) und einem zweiten Alkoxysilan der Formel XₙSi(OC₂H₅)₄₋ₙ, insbesondere Methyltriethoxysilan (MTEOS). Die Lösung A kann noch weitere Alkoxysilane enthalten, enthält jedoch bevorzugt ausschliesslich die beiden eingangs genannten Alkoxysilane TEOS und MTEOS. Enthält die Lösung A weitere Alkoxysilane, so sind deren Alkoxy-Gruppen bevorzugt nicht aus Methoxy. Bei der Verwendung von Alkoxysilane mit Methoxy-Gruppen, wie z. B. Methyltrimethoxysilan (MTMOS), werden bei der Hydrolyse Methanole freigesetzt, welche gesundheitsschädliche Dämpfe erzeugen, die in der Lösungsmittelverarbeitenden Industrie unerwünscht, bzw. durch gesetzliche Vorschriften nicht mehr zulässig sind. Ferner weisen Methanole einen verhältnismässig tiefen Flammpunkt auf. Alkoxysilane mit Ethoxy-Gruppen setzen hingegen bei der Hydrolyse keine gesundheitsgefährdenden Alkohole frei und sind daher unbedenklich.

Die Alkoxysilane der Lösung A liegen in einem wasserfreien Medium in nicht hydrolisierter Form vor. Als Lösungsmittel wird bevorzugt ein Alkohol mit vergleichsweise hohem Siedepunkt, wie z. B. ein Glykol oder eine Glykolverbindung, verwendet. Dies kann z. B. Ethylenglykol oder 2-Buthoxyethanol sein. Obwohl durch die Hydrolyse weitere Alkohole freigesetzt werden, welche einen massgeblichen Einfluss auf den Flammpunkt haben, kann durch die Wahl eines geeigneten Lösungsmittel, wie oben beschrieben, der Flammpunkt der Gesamtlösung um ein paar Grade soweit nach oben verschoben werden, dass dieser über dem Grenzwert von 21°C gemäss nach ISO 13736 bzw, ASTM D6450 zu liegen kommt.

Die **Lösung B** enthält bevorzugt in Wasser gelöste kolloidale Kieselsäure. In zweckmässlger Ausführung wird die Lösung B mittels Säure, vorzugsweise mittels Salpetersäure (HNO₃), auf einen pH-Wert zwischen 2,0 - 3.0, vorzugsweise zwischen 2,3 - 2,7 und insbesondere von rund 2,5 eingestellt.

Die verwendete Kieselsäure ist zweckmässig eine in saurem Milieu stabilisierte Kleselsäure, wobei der pH-Wert der Kleselsäure vorteilhaft bei 2 - 3 liegt. Die Kleselsäure ist vorteilhaft möglichst alkaliarm, Der Alkaligehalt (z.B. Na₂O) der Kieselsäure liegt bevorzugt unter 0,04 Gew.%.

Die Lösung B ist zweckmässig mittels Salpetersäure (HNO₃) auf einen pH-Wert zwischen 2,0 - 3,0, vorzugsweise zwischen 2,3 - 2,7, und insbesondere von 2,5 eingestellt. Eine bevorzugte Kieselsäure-Lösung wird beispielsweise durch die Firma Nissan Chemical Industries Ltd. mit dem Produktname "SNOWTEX^{®} O" vertrieben. Es sind jedoch auch Kieselsäure-Lösungen von anderen Herstellern denkbar, welche dieselben positiven Eigenschaften von "SNOWTEX^{®} O" aufweisen oder diese sogar übertreffen.

Die Lösung B braucht nicht zwingend kolloidale Kleselsäure zu enthalten und kann z. B auch nur angesäuertes Wasser bzw, eine saure, wässrige Lösung mit einem pH-Wert von < 7 sein. Die Verwendung von kolloidaler Kieselsäure ermöglicht jedoch unter anderem die optische Bestimmung des idealen Mischungsverhältnisses, da Letzteres bei der Verwendung von kolloldaler Kleselsäure und Methanol als Lösungsmittel durch eine Trübung der Mischlösung feststellbar ist.

Ist die Lösung B eine saure, wässrige Lösung, so werden die beiden Lösungen A und B bevorzugt in einem Gewichts-Verhältnis von rund 7.5 : 2.5 Teilen gemischt. Ist die Lösung B eine Lösung mit kolloldaler Kieselsäure der vorgenannten Art, so werden die beiden Lösungen A und B bevorzugt In einem Gewichts-Verhältnis von rund 7 : 3 Teilen gemischt.

Das Zusammenführen und Mischen der beiden Basislösungen A und B führt zu einer Hydrolysereaktion zwischen dem in Lösung B enthaltenen Wasser und den In Lösung A enthaltenen Alkoxysllenen.

Hydrolyse-Reaktion:

Si(OR)ₘ + mH₂O → Si(OH)ₘ +mR(OH)

Dem hydrolysierten Gemisch wird zwecks Erhöhung des Flammpunktes in Wasser gelöste, kolioldale Kieselsäure hinzu gegeben. Die kolloidale Kieselsäure dient dabei dem Zweck, den Faststoffantell des Gemisches nicht absinken zu lassen. Anstelle von kolloidaler Kieselsäure kann jedoch auch nur Wasser bzw. angesäuertes Wasser hinzu gegeben werden.

Bevorzugt werden von 1 bis 20 Gew.-%, bezogen auf das Gemisch von Lösung A und B, wässrige, kolloidale Kieselsäure zum Gemisch aus Lösung A und B nach Abschluss der Hydrolyse-Reaktion zugefügt.

Nach Abschluss der Hydrolyse-Reaktion ist das Hinzufügen von 1 bis 20 Gew.-%, bezogen auf das Gemisch von Lösung A und B, der wässrigen, kolloidalen Kieselsäure mit einem Gehalt von 20 bis 30 Gew.-% SiO₂, bezogen auf die wässrige kolloidale Kieselsäure, zum Gemisch aus Lösung A und B besonders bevorzugt.

Wird wässrige, kolloidale Kieselsäure nach Abschluss der Hydrolyse-Reaktion zwischen Lösung A und B hinzugefügt, so kann diese wässrige kolloidale Kieselsäure der Zusammensetzung der Lösung B entsprechen. D.h., es wird eine Übermenge an Lösung B bereitgestellt, die vorgesehene Mengen an Lösungen A und B hydrolisiert und nach erfolgter Hydrolyse zwischen Lösung A und B wird eine Restmenge an Lösung B als die wässrige, kolloidale Kieselsäure zur Mischung aus den hydrolisierten Lösungen A und B hinzugefügt.

Der Sol-Gel-Lack wird zweckmässig in Gel-Form auf den Reflektorkörper, bzw. auf die entsprechende Oberfläche, aufgetragen bzw. abgeschieden und anschliessend einem Härtungs- und Trocknungsprozess unterzogen. Beim Härtungsprozess setzt eine Kondensationsreaktion ein, bei der unter Wasser-Abspaltung aus jeweils zwei Si-OH-Gruppen eine Siloxan-Bindung (Si-O-Si) aufgebaut wird. Durch fortschreitende Polymerisation entsteht dabei ein Netzwerk von Polysiloxanen, an welche Alkoxy-Gruppen angegliedert sind. Der Trocknungsprozess besteht darin, die im Sol-Gel-Lack verbleibenden Wasser und Alkohole auszutreiben, wodurch der Sol-Gel-Lack aushärtet und eine witterungsbeständige und korrosionsfeste Schutzschicht auf der Reflektoroberfläche bzw. der Reflexionsschicht entsteht.

Die Beschichtung erfolgt zweckmässig in einem kontinuierlichen Verfahren, durch beispielsweise Aufpinseln, Aufwalzen, Schleudern, Spritzen Tauchen bzw. Tauchziehbeschichten. Besonders bevorzugte kontinuierliche Beschichtungsverfahren sind das Banddurchlaufverfahren oder Bandlackierungsverfahren, auch Coil-Coating-Verfahren genannt.

Der mit dem Sol-Gel-Lack beschichtete Reflektor wird zweckmässig mittels Strahlung, wie UV-Strahlung, Elektronenstrahlung, Laserstrahlung, oder mittels Wärmestrahlung, wie IR-Strahlung, oder mittels Konvektionserwärmung oder einer Kombination der vorgenannten Trocknungs- bzw. Härtungsverfahren, getrocknet resp. gehärtet.

Die erhöhte Temperatur, gemessen am Reflektorkörper, zur Trocknung bzw. Härtung des Sol-Gel-Lackes ist zweckmassig grösser als 60° C, vorzugsweise grösser als 150° C und insbesondere grösser als 200° C. Die erhöhte Temperatur ist ferner zweckmässig kleiner als 400°C, vorzugsweise kleiner als 350°C und insbesondere kleiner als 300°. Die erhöhte Temperatur liegt besonders bevorzugt zwischen 250°C und 300°C. Bei der Temperaturangabe handelt es sich um eine sogenannte "Peak Metal Temperature" (PMT).

Die erhöhte Temperatur kann beispielsweise während 5 Sekunden bis 2 Minuten auf den Körper einwirken. Der Sol-Gel-Lack wird während einer Zelt von vorzugsweise weniger als 90 Sekunden, insbesondere von weniger als 60 Sekunden, und von vorzugsweise mehr als 10 Sekunden, insbesondere von mehr als 30 Sekunden getrocknet bzw. gehärtet. Bei Einsatz von IR-Strahlung liegen die Trocknungszeiten eher im unteren Bereich der angegebenen Aufenthaltszeiten.

Die Konvektionserwärmung kann zweckmässig durch eine Beaufschlagung mit erwärmten Gasen, wie Luft, Stickstoff, Edelgase oder Gemischen daraus, erfolgen. Die Sol-Gel-Lackschicht wird bevorzugt in einem Durchlaufofen getrocknet.

Die Reflektoren, beispielsweise In Form von Folien, Bändern oder Blechen, lassen sich nach dem Auftrag und Trocknung der Schutzschicht auch umformen. Die Reflektoren könne z.B. zu Parabolwannen weiterverarbeitet werden. Die Umformung führt dabei kaum zu Rissbildung In der Schutzschicht.

Die Reflektoren weisen eine gute Schutzwirkung gegen Witterungseinflüsse, Korroslon, mechanischen Abbau oder Abrieb bzw. weisen eine hohe Kratzfestigkeit auf. Kreldung tritt praktisch keine auf. Wird bei der Herstellung der Siloxane kolloidale Kleselsäure verwendet, so lassen sich grössere Schichtdicken im Mikrometerbereich herstellen, bei welchen während des Trocknungs-und Härtungsprozesses keine Rissbildung, z.B. aufgrund Volumenkontraktion, entsteht.

Ferner erlauben die Reflektoren den Einsatz von Aluminiumiegierungen, ohne dass diese zwecks Erreichen hoher Glanz- und Gesamtreflexionswerte z.B. mit Rein- oder Reinstaluminium plattiert bzw. beschichtet werden müssen. Im Gegensatz zu den Reflektoren aus Rein- oder Reinstaluminium, weisen Letztere jedoch wesentilch höhere Festigkeiten auf, was für verschiedenste Anwendungen unabdingbar ist.

Der Reflektor weist eine Gesamtreflexion nach DIN 5036 3. Teil, Insbesondere eine Gesamtreflexion im sichtbaren und infraroten Wellenlängenbereich, von grösser als 75%, vorzugsweise von grösser als 80%, und insbesondere von grösser als 83%, auf.

Enthält der Reflektor ein zusätzliches reflexionserhöhendes Schichtsystem, beträgt die genannte Gesamtreflexlon über 75%, vorzugsweise über 85%, und insbesondere über 90%.

Wird die Aiuminlumoberfläche des Reflektorkörpers vorgängig geglänzt, so weist der Reflektor in der Regel Glanzwerte im sichtbaren Wellenlängenbereich nach DIN 67530 von über 73% auf. Wird die Aluminiumoberfläche des Raflektorkörpers nicht vorgängig geglänzt, so weist der Reflektor In der Regel Glanzwerte im sichtbaren Wellenlängenbereich nach DIN 67530 von über 63% auf.

Die genannte Gesamtrefiexion und der Glanz des erfindungsgemässen Reflektors nimmt beispielsweise nach 3000h (Stunden) QUV-Test und insbesondere nach 2000h QUV-Test um weniger als 5%, und insbesondere um weniger als 2% ab.

Der QUV-Test ist ein künstlicher Bewitterungstest zur Beurteilung der Witterungsbeständigkeit von Bauteilen und ihren Oberflächen im Freien. Der QUV-Test wurde 1969 durch das Unternehmen "Q-Panel" eingeführt und Ist heute eine international standardisierte Testmethode, Der in vorliegenden Versuchen angewendete QUV-Test wurde gemäss den Vorgaben nach "Standard Practice for Operating Light- and Water-Exposure Apparatus (Fluorescent UV-Condensation Type) for Exposure of Nonmetallic Materials" der American Society for Testing and Materials", bzw. nach ASTM G 53-96, ausgeführt.

Der Reflektor weist ferner im 1000h "Filiformkorrosionstest" nach DIN EN ISO 3665, keine Korrosionserscheinungen auf. Überdies beträgt die Abnahme der Gesamtreflexion und des Glanzes im 1000h "Essigsaure Salzsprühtest" nach DIN 50021 ESS weniger als 5%, insbesondere weniger als 2%.

Des weiteren verfügen die Reflektoren dank der Sol-Gel-Schutzschicht aus Polysiloxanen über eine hohe Oberflächenhärte. Die Sol-Gel-Schutzschicht weist zweckmasalg eine Härte gemessen nach der Methode "Bleistfftverfahren nach Wolf Wilbum" nach DIN 55350 Teil 18 von grösser "F", vorzugsweise von grösser "H", insbesondere von grösser "2H" und vorteilhaft von grösser "3H" auf, wobei grösser im Sinne von härter zu verstehen ist.

Die Sol-Gel-Schicht zeichnet sich zudem durch eine ausgezelchnete Haftung auf dem Reflektorkörper bzw. auf den darüber liegenden Schichten aus.

Der Reflektor ist herstellbar dadurch, die reflektierende Oberfläche aus Aluminium oder einer Aluminiumlegierung eine Rauhigkeit Ra von kleiner als 0,1 µm nach DIN 4761 bis 4768 aufweist und der Reflektor eine aussen liegende, abschliessende transparente Schutzschicht aus einem Polymer einer Dicke von grösser als 1 µm enthält und die Schutzschicht in einem kontinuierlichen Coil-Coating-Verfahren auf die reflektierende Oberfläche, die vorbehandlungsschicht oder das Reflexionsschichisystem aufgetragen wird und die Schutzschicht des Reflektor In einem Durchlaufofen getrocknet und gehärtet wird.

Die Bandbeschichtungsgeschwindigkeit in einem Banddurchlaufverfahren beträgt beispielsweise rund 30m/min.

Der Reflektorkörper wird vorzugsweise in einem Durchlaufofen unter Einwirkung von Wärmestrahlung und/oder Konvektionswärme, vorzugsweise unter Beautschlagung mit erwärmten Gasen getrocknel.

Die Beschichtung erfolgt zweckmässig bei Raumtemperatur. z.B. bei 10 - 30 °C, insbesondere bei 15 - 25 °C.

Die Reflektoren sind beispielswelse geeignet als Reflektoren oder Lichtleitelemente in der Licht- und Leuchtentechnik, wie Reflektoren in Bildschirmarbeitsplatz-leuchten. Primärleuchten, Sekundarleuchten, Rasterlauchten, Lichtdecken oder als Lichtumienklamellen. Ferner können die erfindungsgemässen Reflektoren in der Solartechnik als Solar-Reflektoren, z.B. in der thermischen Solartechnik, als Solar Booster im Bereich der Photovoltaik, in Solar-Kraftwerken, als lichtkonzentrierende Sonnenkollektoren, in Solar-Kocher oder Solar-Öfen, eingesetzt werden.

Ferner können die Reflektoren als leichte, unzerbrechliche und gegebenenfalls beheizbare Spiegel für Fahrzeuge oder als Scheinwerferreftektoren eingesetzt werden. Die besagten Reflektoren können auch als Fassadenelemente mit reflektierenden Eigenschaften bzw. mit Glanzeigenschaften eingesetzt werden. Die beispielsweise hoch- oder matt-glänzenden Aluminiumoberflächen sind dabei dank der emndungsgemässen Schutzschicht korrosionsfest versiegelt.

Die IR-Strahlung, das sichtbare Licht und die UV-Strahlung decken dabei den Wellenlängenbereich von 10⁻⁸ m bis 10⁻³ m ab.

Nachfolgend wird anhand eines Beispiels die Zubereitung und Herstellung einer besonders bevorzugten Ausführung eines Sol-Gel-Lackes beschrieben. Dazu werden eine Lösung A und eine Lösung B vorbereitet, wobei die Lösung B gemäss einer 1. und 2 Alternative hergestellt werden können:
Lösung A enthält:
   200 g Isopropylalkohol
   160 g Tetraethoxysilen (TEOS)
   468 g Methyltrimethoxysilan (MTES)
Total Lösung A: 808 g
Lösung B (Alternative 1) enthält:
   248 g Wasser
Lösung B (Alternative 2) enthält:
   335 g 26 %-ige kolloidale Kieselsäure enthaltend 248 g Wasser und 87 g SiO₂

   Der pH-Wert der Lösung B ist unter Zugabe einer Säure, insbesondere Salpetersäure (HNO₃), auf ca. 2,5 eingestellt.

Die Herstellung des Sol-Gel-Lackes und die Beschichtung des Reflektorkörpers erfolgt in bevorzugter Ausführung wie folgt:
Einer Basislösung A, wie zuvor beschrieben, wird unter Rühren eine Lösung B in den oben genannten Anteilen zugegeben. Die Lösungen A und B werden unter kontinuierlichem Rühren in eine Mischlösung überführt, wobei reaktionsbedingt Wärme freigesetzt wird.

Die Mischlösung wird über eine bestimmte Zelt, beispielsweise während 1 h (Stunde) bis 10 h, vorzugsweise währen 4 bis 8 h, Insbesondere während rund 6 h gerührt und kühlt dabei ab. Danach wird die Mischlösung filtriert.

Dem Gemisch wird nach Abschluss der Hydrolyse-Reaktion und vor dem Filtervorgang zwecks Erhöhung des Flammpunktes wässrige, kolloidale Kieselsäure oder Wasser beigeben werden.

Das Filtrieren dient dem Rückhalt grösserer Partikel, wie z.B. Agglomerationen von kolloidaler Kieselsäure. Der Porendurchmesser bzw. die Maschenweite des Filters richtet sich nach der angestrebten Schichtdicke, da Partikel mit grösserem Durchmesser als die angestrebte Schichtdicke die Oberflächenqualität der Schutzschicht beeinträchtigen. Die Filtration kann beispielsweise mittels Polypropylenfilter mit einer Maschenweite von 1 µm erfolgen.

Die Mischlösung wird vorzugsweise auf einem pH-Wert von 2-3, vorzugsweise von 2,3 bis 2,7 und besonders bevorzugt von 2,5, gehalten. Die Angleichung des pH-Wertes erfolgt mittels Säure, bevorzugt mittels Salpetersäure.

Nach Abschluss des Rührvorganges kann der Sol-Gel-Lack mittels eines der vorgenannten Verfahrens auf den Reflektorkörper oder die darüber liegenden Schichten aufgetragen und nachfolgend, wie vorgängig beschrieben, getrocknet bzw. gehärtet werden.

Der Sol-Gel-Lack wird nach seiner Herstellung und vor dem Auftrag auf den Reflektorkörper bevorzugt während weniger Minuten bis mehreren Stunden, vorzugsweise zwischen 1 und 24 h (Stunden), insbesondere zwischen 12 und 22 h und besonders bevorzugt während rund 17 h ruhig gestellt.

Die Elementenalyse des ausgehärteten Sol-Gel-Lackes mittels XPS (X-Ray Photoelectron Spectroscopy) weist unter anderem die Elemente Sauerstoff, Silizium und rund 3 - 20% (Atomprozente) Kohlenstoff nach. Wird die Mischlösung zusätzlich verdünnt, so liegt der Anteil an Kohlenstoff eher tief bei rund 3 %. Wird die Mischlösung jedoch nicht verdünnt, so liegt der Anteil eher höher, bei ca. 7 %.

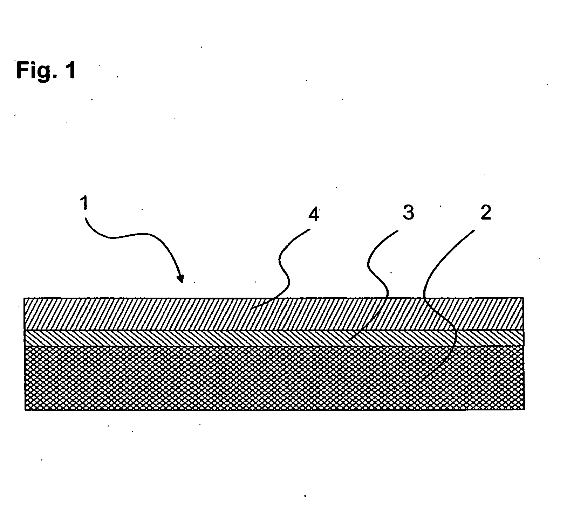

Der Aufbau eines Reflektors ist beispielhaft anhand der Figur 1 dargestellt, welche eine Querschnittsansicht durch einen Reflektor zeigt.

Der Reflektor (1) besteht aus einem Reflektorkörper (2), welcher ein Walzprodukt aus Aluminium mit einem Reinheitsgrad von grösser 99,8% ist. Die Oberfläche des Reflektorkörpers (2) ist entfettet und mit einer Vorbehandlungsschicht (3) versehen. Die Vorbehandlungsschicht (3) ist eine anodisch erzeugte Oxidechicht mit einer Dicke von 300 - 500 nm. Auf die Vorbehandlungsschicht ist eine Sol-Gel-Lackschicht (4) von 3 µm Dicke aus Polysiloxanen aufgebracht.

## Patentansprüche

1. Verfahren zur Herstellung eines Witterungs-und korrosionsbeständigen Reflektors (1) für elektromagnetische Strahlung, insbesondere für Infrarot-Strahlung, sichtbares Licht und Ultraviolett-Strahlung, mit hoher Gesamtreflexion, enthaltend einen Reflektorkörper (2) aus Aluminium oder einer Aluminiumlegierung mit einer reflektierenden Oberfläche oder enthaltend einen Reflektorkörper mit einer eine reflektierende Oberfläche ausbildenden Reflexionsschicht aus Aluminium oder einer Aluminiumlegierung, wobei der Reflektor (1) eine aussen liegende, abschliessende transparente Schutzschicht (4) aus einem Sol-Gel-Lack enthält, und der Sol-Gel-Lack aus einem Polysiloxan ist, **gekennzeichnet, durch** die folgenden Verfahrensschritte:
a) säurekatalysierte Hydrolyse eines Gemisches aus einer Lösung A und einer Lösung B aus einer wässrigen, kolloidalen Kieselsäure mit einem pH-Wert von tiefer 7 oder angesäuertes Wasser mit einem pH-Wert von tiefer 7 ist, wobei die Lösung A eine Lösung mit einem ersten und zweiten Alkoxysilan in einem alkoholischen Lösungsmittel ist, und das erste Alkoxysilan ein Tetraethoxysilan (TEOS) und das zweite Alkoxysilan **durch** die Formel XₙSi(OC₂H₅)₄₋ₙ beschrieben wird, wobei n eine Zahl von 0 bis 3 ist und Xₙ einen organischen Rest beschreibt;
b) Auftragen des hydrolisierten Gemisches auf die freie Oberfläche des Reflektorkörpers in einem kontinuierlichen Coil-Coating-Verfahren;
c) Einleitung des Kondesationsprozess und Aushärtung und Trocknung der Sol-Gel-Lackschicht in einem Durchlaufofen;
**dadurch** gekennzeichnet, dass
zwischen den Verfahrenschritten a) und b) nach Abschluss der Hydrolyse-Reaktion zwecks Erhöhung des Flammpunktes Wasser oder 1 bis 20 Gew.-%, bezogen auf das Gemisch von Lösung A und B, wässrige, kolloidale Kleselsäure zum Gemisch aus Lösung A und B hinzugefügt wird.

2. Verfahren nach Anspruch 1. **dadurch gekennzeichnet, dass** eine wässrige, kolloidale Kieselsäure mit einem Gehalt von 20 bis 30 Gew.-% SiO₂, bezogen auf die wässrige, kolloidale Kieselsäure, zum Gemisch aus Lösung A und B hinzugefügt wird.

3. Verfahren nach Anspruch 1 oder 2, **dadurch gekennzeichnet, dass** die zum Gemisch aus Lösung A und B hinzugefügte wässrige, kolloidale Kieselsäure der Zusammensetzung der Lösung B entspricht.

4. Verfahren nach einem der Ansprüche 1 bis 3, **dadurch gekennzeichnet, dass** das zweite Alkoxysilan ein Methyltriethoxysilan (MTEOS) ist.

5. Verfahren nach einem der Ansprüche 1 bis 4, **dadurch gekennzeichnet, dass** das alkohollsche Lösungsmittel der Lösung A ein Glykol oder eine Glykolverbindung enthält oder daraus besteht, und insbesondere ein Ethylenglykol oder Buthoxyethanol ist.

6. Verfahren nach einem der Ansprüche 1 bis 5, **dadurch gekennzeichnet, dass** der Reflektorkörper (2) bei Raumtemperatur mit dem hydrollsierten Gemisch beschichtet wird und die Reflektorbeschichtung in einem Durchlaufofen unter Einwirkung von Wärmestrahlung und/oder Konvektionswärme, vorzugsweise unter Beaufschlagung mit erwärmten Gasen, gehärtet und getrocknet wird.

7. Verfahren nach einem der Ansprüche 1 bis 6, **dadurch gekennzeichnet, dass** die Reflektorbeschichtung bei einer Temperatur zwischen 110 und 400°C während einer Zelt von weniger als 90 Sekunden, gehärtet und getrocknet wird.

8. Verfahren nach Anspruch 7, **dadurch gekennzeichnet, dass** die Reflektorbeschichtung bei einer Temperatur zwischen 200 und 350°C während einer Zelt von weniger als 90 Sekunden gehärtet und getrocknet wird.

9. Verfahren nach Anspruch 8, **dadurch gekennzeichnet, dass** die Reflektorbeschichtung bei einer Temperatur zwischen 250 und 300°C während einer Zeit von weniger als 90 Sekunden, gehärtet und getrocknet wird.

10. Verfahren nach einem der Ansprüche 7 bis 9, **dadurch gekennzeichnet, dass** die Reflektorbeschichtung während einer Zeit von weniger als 60 Sekunden gehärtet und getrocknet wird.

## Claims

1. A method of producing a weather -proof and corrosion - resistant reflector (1) for electromagnetic radiation, particularly for infrared radiation, visible light and ultraviolet radiation, with high total reflection, containing a reflector bo dy (2) made of aluminium or an aluminium alloy with a reflecting surface or containing a reflector with a reflection layer made of aluminium or an aluminium alloy forming a reflecting surface, wherein the reflector (1) contains an external, final transparent protective layer (4) made of a sol-gel paint and the sol-gel paint is made of a polysiloxane, **characterised by** the following process steps:
a) acid-catalysed hydrolysis of a mixture of a solution A and a solution B of an aqueous, colloidal silicic acid with a pH-value below 7 or acidic water with a pH-value below 7, wherein the solution A is a solution with a first and second alkoxysilane in an alcoholic solvent and the first alkoxysilane is a tetraethoxysilane (TEOS) and the second alkoxysilane is desc ribed by the formula XₙSi(OC₂H₅)₄₋ₙ, where n is a number between 0 and 3 and Xₙ is an organic residue;
b) application of the hydrolysed mixture to the free surface of the refl ector body in a continuous coil-coating process;
c) introduction of the condensation process and hardening and drying of the sol -gel paint layer in a continuous furnace;
**characterised in that**
upon completion of the hydrolysis reaction water or 1 to 20 % by weight aqueous, colloidal silicic acid relative to the mixture of solut ion A and B is added to said mixture of solution A and B between process steps a) and b) to raise the flashpoint.

2. The method according to claim 1, **characterised in that** an aqueous, colloidal silicic acid with a content of 20 to 30 % by weight SiO₂ relative to the aqueous colloidal silicic acid is added to the mixture of solution A and B.

3. The method according to claim 1 or 2, **characterised in that** the aqueous, colloidal silicic acid added to the mixture of solution A and B corresponds to the composition of solution B.

4. The method according to one of the claims 1 to 3, **characterised in that** the second alkoxysilane is a methyltriethoxysilane (MTEOS).

5. The method according to one of the claims 1 to 4, **characterised in that** the alcoholic solvent of the solution A contains or is made up of a glycol or a glycol compound and is particularly an ethylene glycol or buthoxyethanol.

6. The method according to one of the claims 1 to 5, **characterised in that** the reflector body (2) is coated with the hydrolysed mixture at room temperature and the reflector coating is hardened and dried in a continuous furnace under the action of thermal radiation and/or convection heat, preferably under exposure to heated gases.

7. The method according to one of the claims 1 to 6, **characterised in that** the reflector coating is hardened and dried at a temperature of between 110 and 400 °C over a period of under 90 seconds.

8. The method according to claim 7, **characterised in that** the reflector coating is hardened and dried at a temperature of between 200 and 350 °C over a period of under 90 seconds.

9. The method according to claim 8, **characterised in that** the reflector coating is hardened and dried at a temperature of between 250 and 300 °C over a period of under 90 seconds.

10. The method according to one of the claims 7 to 9, **characterised in that** the reflector coating is hardened and dried for a period of under 60 seconds.

## Revendications

1. Procédé de fabrication d'un réflecteur (1) résistant aux intempéries et à la corrosion pour un rayonnement électromagnétique, notamment pour un rayonnement infrarouge, la lumière visible ou un rayonnement ultraviolet, d'une réflexion totale élevée, comprenant un corps de réflecteur (2) en aluminium ou en un alliage d'aluminium avec une surface réfléchissante ou comprenant un corps de réflecteur avec une couche de réflexion en aluminium ou en un alliage d'aluminium formant une surface réfléchissante, le réflecteur (1) comprenant une couche de protection (4) de terminaison transparente, située à l'extérieur en une laque sol-gel et la laque sol -gel étant constituée d'un polysiloxane, **caractérisé par** les étapes de procédé suivantes :
a) hydrolyse par catalyse acide d'un mélange d'une solution A et d'une solution B en un acide silicique colloïdal aqueux d'une valeur pH inférieure à 7 ou une eau acidifiée d'une valeur pH inférieure à 7, la solution A étant une solution avec un premier et un deux ième alcoxy-silane dans un solvant alcoolisé et le premier alcoxy-silane étant un tétraéthoxyortho-silane (TEOS) et le deuxième alcoxy-silane étant décrit par la formule XₙSi(OC₂H5)₄₋ₙ, n étant un nombre de 0 à 3 et Xₙ décrivant un reste organique ;
b) application du mélange hydrolysé sur la surface libre du corps de réflecteur dans un procédé de laquage en continu ;
c) introduction du processus de condensation et durcissement par séchage de la couche de laque sol-gel dans un four à passage continu ;
**caractérisé en ce que**
entre les étapes de procédé a) et b), après achèvement de la réaction d'hydrolyse pour l'augmentation du point d'inflammation, de l'eau ou de 1 à 20 % en poids, en rapport au mélange de la solution A et de la solution B, d'acide silicique colloïdal aqueux est ajouté(e) au mélange des solutions A et B.

2. Procédé selon la revendication 1, **caractérisé en ce qu'**on ajoute au mélange des solutions A et B un acide silicique colloïdal aqueux, d'une teneur de 20 à 30 % en poids de SiO ₂, en rap port à l'acide silicique colloïdal aqueux.

3. Procédé selon la revendication 1 ou 2, **caractérisé en ce que** l'acide silicique colloïdal aqueux ajouté au mélange des solutions A et B correspond à la composition de la solution B.

4. Procédé selon l'une quelconque des revendications 1 à 3, **caractérisé en ce que** le deuxième alcoxy-silane est un méthyltriméthoxysilane (MTEOS).

5. Procédé selon l'une quelconque des revendications 1 à 4, **caractérisé en ce que** le solvant alcoolisé de la solution A contient un glycol ou un composé glycolique ou consiste dans ces derniers et est notamment un éthylène glycol ou un buthoxyéthanol.

6. Procédé selon l'une quelconque des revendications 1 à 5, **caractérisé en ce qu'**on revêt le corps de réflecteur (2) à température ambiante avec le mélange hydrolyse et **en ce qu'**on fait durcir et sécher le revêtement du réflecteur dans un four à passage continu, sous l'effet d'un rayonnement thermique et/ou de chaleur de convection, de préférence par soumission à des gaz chauffés.

7. Procédé selon l'une quelconque des revendications 1 à 6, **caractérisé en ce qu'**on fait durcir et sécher le revêtement du réflecteur à une température comprise entre 110 et 400°C pendant une période inférieure à 90 secondes.

8. Procédé selon la revendication 7, **caractérisé en ce qu'**on fait durcir et sécher le revêtement du réflecteur à une température comprise entre 200 et 350°C pendant une période inférieure à 90 secondes.

9. Procédé selon la revendication 8, **caractérisé en ce qu'**on fait durcir et sécher le revêtement du réflecteur à une température comprise entre 250 et 300°C pendant une période inférieure à 90 secondes.

10. Procédé selon l'une quelconque des revendications 7 à 9, **caractérisé en ce qu'**on fait durcir et sécher le revêtement du réflecteur pendant une période inférieure à 60 secondes.
